**Europäisches Patentamt**

**European Patent Office**

**Office européen des brevets**

(19)

(11) Veröffentlichungsnummer : **0 164 335 B1**

(12)

# EUROPÄISCHE PATENTSCHRIFT

(45) Veröffentlichungstag der Patentschrift : 19.10.88

(51) Int. Cl.⁴ : **E 04 F 13/08**

(21) Anmeldenummer : **85890116.8**

(22) Anmeldetag : **21.05.85**

(54) Anker für Steinplattenverkleidungen von Fassaden od.dgl.

(30) Priorität : 08.06.84 AT 1886/84

(43) Veröffentlichungstag der Anmeldung : 11.12.85 Patentblatt 85/50

(45) Bekanntmachung des Hinweises auf die Patenterteilung : 19.10.88 Patentblatt 88/42

(84) Benannte Vertragsstaaten :
BE CH DE FR GB IT LI LU NL SE

(56) Entgegenhaltungen :
BE-A- 654 750
DE-A- 1 800 034
DE-A- 1 811 451
DE-A- 2 613 530
DE-A- 2 948 171
DE-B- 1 251 001
DE-B- 2 516 016
FR-A- 2 381 932

(73) Patentinhaber : Pointner, Ferdinand
Tagwerkerstrasse 34
A-4810 Gmunden (AT)

(72) Erfinder : Pointner, Ferdinand
Tagwerkerstrasse 34
A-4810 Gmunden (AT)

(74) Vertreter : Hübscher, Gerhard, Dipl.-Ing. et al
Patentanwälte Dipl.-Ing. Gerhard Hübscher Dipl.-Ing.
Helmut Hübscher Dipl.-Ing. Heiner Hübscher Spittelwiese 7
A-4020 Linz (AT)

EP 0 164 335 B1

**Beschreibung**

Die Erfindung betrifft einen Anker für Steinplattenverkleidungen von Fassaden od. dgl., mit einem am Mauerwerk andübelbaren Halter zur Abstützung eines verstellbaren Trägers gemäß dem Oberbegriff des Anspruchs 1 (vgl. FR-A-2 381 932).

Diese als Natursteinanker bezeichneten Plattenbefestigungen sollen die einzelnen Steinplatten einer Fassadenverkleidung od. dgl. in genau aufeinander abgestimmter Lage halten und bei höher reichenden Verkleidungen vor allem auch tragen. Die meisten bisher bekannten Natursteinanker bestehen aus geraden, zur Versteifung mehr oder weniger stark verwundenen oder profilierten Metallanzen, die an einem abgeflachten Ende den querliegenden Dorn für die Steinplatten aufweisen und zum Ausrichten der einzelnen Platten jeweils entsprechend tief im Mauerwerk eingemörtelt werden müssen. Das Setzen dieser Natursteinanker ist daher äußerst umständlich und zeitraubend, wozu noch kommt, daß die Festigkeit des Ankersitzes von der unkontrollierbaren Sorgfalt des Einmörtelns abhängt und sich der Anker mit diesem Einmauern auch nur sehr ungenau ausrichten läßt.

Es gibt auch schon aus Halter und Träger bestehende Natursteinanker, bei denen der den Dorn aufnehmende bolzenförmige Träger mit einem Gewindeabschnitt in eine Verstellmutter am Halter eingreift und durch Verdrehen justiert werden kann. Zum Setzen der Anker genügt es daher, die Halter am Mauerwerk anzudübeln und den Dorn durch Schraubverstellen des Trägers an die gewünschte Lage der Verkleidungsplatten anzupassen. Allerdings ist die Tragfähigkeit dieser Anker recht gering und sie eignen sich trotz ihres doch beträchtlichen Bauaufwandes nicht als Traganker, sondern lediglich als reine Halteanker, was ihren Anwendungsbereich stark einschränkt.

Der Erfindung liegt daher die Aufgabe zugrunde, diese Mängel zu beseitigen und einen Anker der eingangs geschilderten Art zu schaffen, der sich durch seine Einfachheit und Robustheit auszeichnet, hochbelastbar und dennoch exakt justierbar ist und darüber hinaus eine besonders geschickte Handhabung erlaubt.

Die Erfindung löst diese Aufgabe durch die kennzeichnenden Merkmale des Anspruchs 1. Die Grundplatte wird so am Mauerwerk festgeschraubt, daß die Mittelebene zwischen den Befestigungsschenkeln und damit die Zungenebene lotrecht orientiert ist, so daß auch schon bei vergleichsweise geringen Dimensionen die hohe Belastbarkeit in der für die Tragfähigkeit entscheidenden Vertikalebene gegeben ist. Trotz dieser hohen Belastbarkeit bleibt aber die Zunge gegenüber horizontalen Normalkräften biegeweich, so daß der für eine exakte Verankerung erforderliche Dehnungsausgleich gewährleistet ist. Die zwischen den Befestigungsschenkeln eingeklemmte und sich im freien Endbereich an der Auflage abstützende Zunge überträgt die aufgenommenen Kräfte ohne Schwierigkeiten auf den Halter, der sie über die Grundplatte ins Mauerwerk einleitet. Zum Verstellen der Ankerreichweite braucht dabei lediglich die Zunge bei gelockerter Klemmschraube relativ zu den Befestigungsschenkeln verschoben zu werden, worauf nach Festziehen der Klemmschraube der exakt an den gegebenen Abstand zwischen Mauerwerk und Fassadenplatten angepaßte Anker sofort einsatzbereit ist.

Besitzt die Grundplatte gegenüber dem die Befestigungsschenkel aufnehmenden Mittenbereich zum Mauerwerk hin vorspringende Randbereiche, können beim Andübeln des Halters am Mauerwerk vorhandene Mauerwerksunebenheiten ausgeglichen werden und die Grundplatte läßt sich außerdem zur Verbesserung des Sitzes am Mauerwerk vorspannen.

Um die Klemmverbindung zwischen Befestigungsschenkeln und Zunge zu verstärken, können erfindungsgemäß die einander zugeordneten Klemmflächen der Schenkelinnenseiten bzw. der Zunge aufgerauht oder mit einer Klebeschicht od. dgl. versehen sein.

Vorteilhaft ist es weiters, wenn sich die Auflage bis zur Grundplatte zurückerstreckt und/oder in der Auflage gegenüberliegenden Kantenbereich der Befestigungsschenkel ein Anschlag für die Zunge vorgesehen ist, da durch diese verbesserte Zungenabstützung auch während der Montage beim Eindrücken des Dornes in die Steinplattenbohrungen ein Hochkippen der Zunge sicher verhindert werden kann.

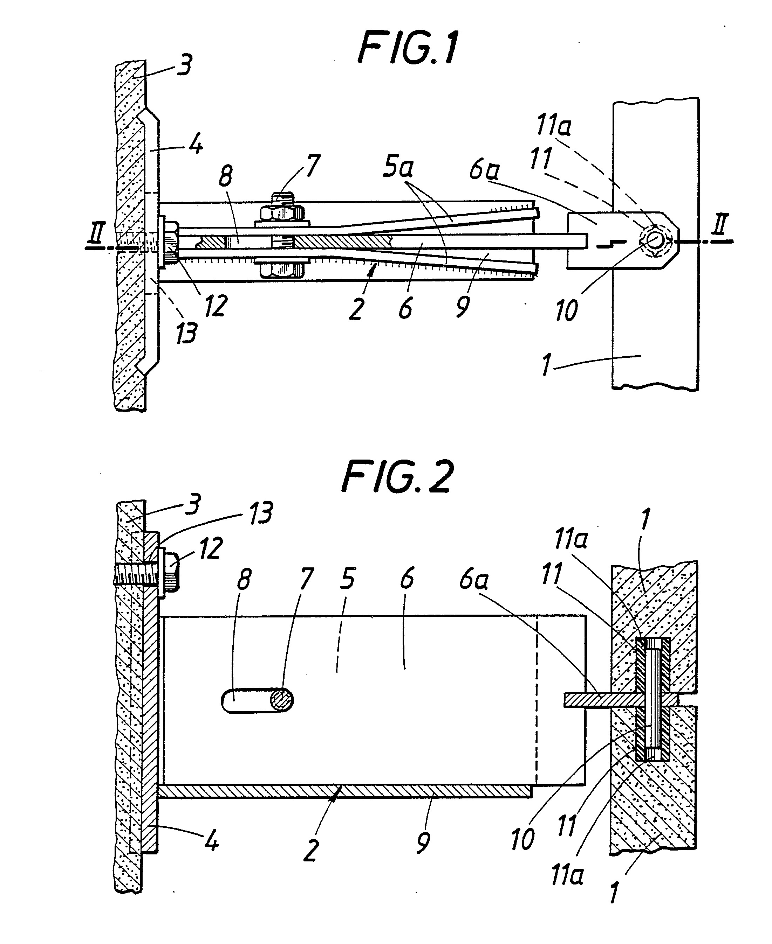

In der Zeichnung ist der Erfindungsgegenstand beispielsweise dargestellt, und zwar zeigen Fig. 1 einen erfindungsgemäßen Anker in teilgeschnittener Draufsicht und Fig. 2 einen Schnitt nach der Linie II-II der Fig. 1.

Um Steinplatten 1 auf einfache Weise zu einer exakten Fassadenverkleidung zusammensetzen zu können, sind Anker 2 vorgesehen, bei denen eine am Mauerwerk 3 festschraubbare Grundplatte 4 mit zwei vorkragenden Befestigungsschenkeln 5 einen Halter für eine verstellbare, als Träger dienende Zunge 6 bilden. Die beiden Befestigungsschenkel 5 nehmen die Zunge 6 flächig zwischen sich auf, wobei die Zunge 6 lotrecht orientiert ist und mittels einer Klemmschraube 7, die durch ein Langloch 8 führt, mit den Befestigungsschenkeln 5 verspannt ist. Die Befestigungsschenkel 5 öffnen sich mit ihren Enden 5a und geben der Zunge 6 seitliches Bewegungsspiel zum Ausgleich von Dehnungen. Eine den Befestigungsschenkeln 5 entlang verlaufende Auflage 9 sorgt für eine Abstützung der Zunge 6 und verhindert deren Ab- oder Aufwärtskippen, so daß ein hochbelastbarer Halter für die Zunge 6 entsteht. Da die Zunge im wesentlichen vertikal, also durch in der Zungenebene liegende Kräfte belastet wird, ist sie trotz ihrer seitlichen Beweglichkeit ebenfalls hoch belastbar, womit schon mit vergleichsweise kleinen Dimensionen die gewünschte Tragfähigkeit des Ankers 2 erreicht wird.

Zur Fixierung der Steinplatten 1 ist am freien Ende der Zunge 6 ein Dornträger 6a mit einem Dorn 10 vorgesehen, welcher Dorn 10 in Bohrungen 11 der Steinplatten 1 eingreift. Kunststoffhülsen 11a mit sternförmigem Querschnitt sitzen in den Bohrungen 11, um von Toleranzen unabhängige Passungen zu erreichen.

Zum Montieren des Ankers 2 wird die Grundplatte 4 mittels einer Befestigungsschraube 12 am Mauerwerk 3 angedübelt, wobei ein Querschlitz 13 auch einen etwaigen Versatz der Bohrlöcher gegenüber der genauen Mittenposition ermöglicht. Nun braucht nur mehr die Zunge 6 bei gelockerter Klemmschraube 7 entsprechend dem gewünschten Abstand der Steinplatten 1 vom Mauerwerk 3 aus den Befestigungsschenkeln 5 herausgezogen und in dieser Position durch Anziehen der Klemmschraube 7 fixiert zu werden und der Anker ist gesetzt und justiert. Es können in der Zungenebene größte Kräfte und Momente aufgenommen und ins Mauerwerk 3 übertragen werden, wobei trotz dieser hohen Belastbarkeit stets durch ein seitliches Ausweichen die Möglichkeit des Dehnungsausgleiches gewährleistet ist.

## Patentansprüche

1. Anker für Steinplattenverkleidungen von Fassaden od. dgl., mit einem am Mauerwerk (3) andübelbaren Halter zur Abstützung eines verstellbaren Trägers, der an seinem freien Ende einen in stirnseitige Bohrungen (11) der Steinplatten (1) eingreifenden Dorn (10) aufnimmt, wobei der Halter eine am Mauerwerk (3) ansetzbare Grundplatte (4) und zwei von der Grundplatte nebeneinander vorkragende Befestigungsschenkel (5) aufweist, zwischen denen eine den Träger bildende plattenförmige Zunge (6) eingesetzt ist und die Befestigungsschenkel (5) miteinander durch eine Auflageplatte (9) für die Zunge (6) verbunden sind, dadurch gekennzeichnet, daß die Zunge (6) mit lotrecht orientierter Ebene flächig an den Befestigungsschenkeln anliegt und mittels einer durch ein in Schenkellängsrichtung verlaufendes Langloch (8) der Zunge (6) und durch koaxiale Löcher in den Befestigungsschenkeln (5) geführten Klemmschraube (7) fixierbar ist, wobei die Befestigungsschenkel (5) im Bereich zu ihren freien Enden (5a) hin auseinanderlaufen.

2. Anker nach Anspruch 1, dadurch gekennzeichnet, daß die Grundplatte (4) gegenüber dem die Befestigungsschenkel (5) aufnehmenden Mittenbereich zum Mauerwerk (3) hin vorspringende Randbereiche besitzt.

3. Anker nach Anspruch 1 oder 2, dadurch gekennzeichnet, daß die einander zugeordneten Flächen der Befestigungsschenkel (5) und der Zunge aufgerauht oder mit einer Klebeschicht versehen sind.

4. Anker nach einem der Ansprüche 1 bis 3, dadurch gekennzeichnet, daß sich die Auflageplatte (9) bis zur Grundplatte (4) hin erstreckt und/oder die Befestigungsschenkel einen der Auflageplatte gegenüberliegenden Anschlag für die Zunge aufweisen.

## Claims

1. An anchor for stone tile sheathings on façades or the like, comprising a holder, which is adapted to be connected by a plug to the masonry (3) and serves to support an adjustable carrier, which at its free end receives a mandrel (10), which extends into bores (11) formed in end faces of the stone tiles (1), wherein the holder comprises a baseplate (4), which is engageable with the masonry (3), and two juxtaposed fixing legs (5), which protrude from the baseplate and between which a platelike tongue (6), which constitutes the carrier, is inserted, and the fixing legs (5) are interconnected by a plate (9) for supporting the tongue (6), characterized in that the tongue (6) is in surface contact with the fixing legs in a vertically oriented plane and is adapted to be fixed by a clamp screw (7), which extends through a slot (8) which extends in the tongue (6), in the longitudinal direction of the leg, and through coaxial holes in the fixing legs, and the fixing legs (5) diverge towards their free ends (5a).

2. An anchor according to claim 1, characterized in that the baseplate (4) has edge portions which protrude towards the masonry from the central portion, which receives the fixing legs (5).

3. An anchor according to claim 1 or 2, characterized in that the confronting surfaces of the fixing legs (5) and of the tongue are roughened or provided with an adhesive layer.

4. An anchor according to any of claims 1 to 3, characterized in that the supporting plate (9) extends as far es to the baseplate (4) and/or the fixing legs comprise a stop for the tongue, which stop is opposite to the supporting plate.

## Revendications

1. Ancrage pour les revêtements en panneaux de pierre des façades ou équivalents, comprenant une console pouvant être scellée dans la maçonnerie (3) par une cheville pour donner appui à un support réglable qui reçoit, à son extrémité libre, une broche (10) qui est engagée dans des perçages frontaux (11) des panneaux de pierre (1), la console présentant une plaque de base (4) qui peut être appuyée contre la maçonnerie (3) et deux branches de fixation (5) qui font saillie l'une à côté de l'autre sur la plaque de base et entre lesquelles est engagée une languette (6) en forme de plaque qui forme le support, et les branches de fixation (5) étant reliées l'une à l'autre par une plaque de soutien (9) qui soutient la languette (6), caractérisé par le fait que la languette (6) est appuyée à plat contre les branches de fixation par un plan orienté verticalement et peut être fixée dans les branches au moyen d'une vis de serrage (7) qui passe à travers un trou oblong (8) de la languette (6), qui s'étend dans la direction longitudinale des branches, et à travers des trous coaxiaux ménagés dans les branches de fixation (5) qui diverge l'une par rapport à l'autre dans la région allant vers leurs extrémités libres (5a).

2. Ancrage selon la revendication 1, caractérisé par le fait que la plaque de base (4) possède des régions marginales qui sont en saillie, en direction de la maçonnerie (3), par rapport à la région médiane qui reçoit les branches de fixation (5).

3. Ancrage selon l'une des revendications 1 et 2, caractérisé par le fait que les surfaces des branches de fixation (5) et de la languette qui coopèrent entre elles sont rendues rugueuses ou munies d'une couche d'adhésif.

4. Ancrage selon l'une des revendications 1 à 3, caractérisé par le fait que la plaque de soutien (9) se prolonge jusqu'à la plaque de base (4) et/ou que les branches de fixation présentent une butée d'arrêt de la languette, qui est à l'opposé de la plaque de soutien.

# FIG.1

# FIG.2